# EUROPÄISCHE PATENTSCHRIFT

(11) **EP 2 666 583 B1**
(45) Veröffentlichungstag und Bekanntmachung des Hinweises auf die Patenterteilung: **21.01.2015**
(21) Anmeldenummer: 12169323.8
(22) Anmeldetag: 24.05.2012
(51) Int. Cl.: B23Q 1/01, F16C 29/12

(54) **Bewegungseinheit einer Werkzeugmaschine sowie Werkzeugmaschine mit einer derartigen Bewegungseinheit**
Motion unit of a machine tool and machine tool with such a motion unit
Unité mobile d'une machine-outil ainsi que la machine-outil avec une telle unité mobile

(43) Veröffentlichungstag der Anmeldung: 27.11.2013
(73) Patentinhaber: Trumpf Sachsen GmbH, 01904 Neukirch (DE)
(72) Erfinder: Knobel, Carsten, 02689 Sohland (DE); Harnisch, Gunter, 01936 Königsbrück (DE); Krause, Stefan, 02681 Wilthen (DE)
(74) Vertreter: Kohler Schmid Möbus

(56) Entgegenhaltungen:
- EP-A1- 0 935 511
- GB-A- 2 218 121
- US-A- 3 790 233
- US-A1- 2009 110 336
- US-B1- 6 372 179

## Beschreibung

Die Erfindung betrifft eine Bewegungseinheit einer Werkzeugmaschine
- mit einer in einer Vorschubrichtung bewegbaren Tragstruktur zur Lagerung einer Funktionseinheit der Werkzeugmaschine,
- mit einer Führungseinrichtung für die Tragstruktur, die zwei in der Vorschubrichtung verlaufende und quer dazu in einer Führungs-Querrichtung gegeneinander versetzt angeordnete Längsführungen aufweist, an denen jeweils eine Führungseinheit der Führungseinrichtung in der Vorschubrichtung bewegbar und in der Führungs-Querrichtung spielfrei gelagert ist sowie
- mit einer Lagereinrichtung, mittels derer die Tragstruktur an wenigstens einer der Führungseinheiten in der Vorschubrichtung spielfrei und in der Führungs-Querrichtung lose gelagert ist, indem die Lagereinrichtung einen der Tragstruktur zugeordneten tragstrukturseitigen Lagerteil sowie einen der Führungseinheit zugeordnetenen führungsseitigen Lagerteil umfasst, von denen der eine als sich in der Führungs-Querrichtung erstreckende Lageraufnahme mit einer Aufnahmewand und der andere als in die Lageraufnahme eingreifender Lagervorsprung ausgebildet ist, wobei der Lagervorsprung und die Aufnahmewand der Lageraufnahme in der Vorschubrichtung spielfrei aneinander gelagert sind und die Lageraufnahme in der Führungs-Querrichtung ein Übermaß gegenüber dem in die Lageraufnahme eingreifenden Lagervorsprung besitzt und wobei der Lagervorsprung mit der Tragstruktur oder mit der Führungseinheit um eine Achse drehbar verbunden ist, die senkrecht zu der Ebene verläuft, die von der Vorschubrichtung und der Führungs-Querrichtung aufgespannt wird.

Die Erfindung betrifft außerdem eine Werkzeugmaschine mit einer Bewegungseinheit der vorstehenden Art.

Eine gattungsgemäße Bewegungseinheit sowie eine gattungsgemäße Werkzeugmaschine sind offenbart in EP 0 935 511 A1. Der Stand der Technik betrifft eine Werkzeugmaschine mit einer Tragstruktur in Form eines Maschinenportals, das von zwei Linearmotoren an den Längsenden des Maschinenportals in einer Vorschubrichtung angetrieben wird. Das Maschinenportal ist dabei mit seinen Längsenden an jeweils einem Vorschubschlitten gelagert, der seinerseits mit dem in der Vorschubrichtung bewegbaren Teil des betreffenden Linearmotors verbunden ist. Zur Führung des Maschinenportals in der Vorschubrichtung sind für die Vorschubschlitten in der Vorschubrichtung verlaufende Längsführungen vorgesehen, wobei die Längsführung für den einen Vorschubschlitten quer zu der Vorschubrichtung von der Längsführung des anderen Vorschubschlittens beabstandet ist. Die Lagerung des Maschinenportals an dem einen Vorschubschlitten ist quer zu der Vorschubrichtung spielfrei. An dem anderen Vorschubschlitten ist das Maschinenportal mit Spiel quer zu der Vorschubrichtung gelagert. Das spielbehaftete Lager, das für die Querrichtung der Vorschubrichtung ein Loslager bildet, umfasst ein sich mit seiner Längsachse quer zu der Vorschubrichtung erstreckendes Langloch an dem Maschinenportal sowie einen in das Langloch eingreifenden Bolzen an dem betreffenden Vorschubschlitten. Der an dem Vorschubschlitten vorgesehene Bolzen ist in Vorschubrichtung spielfrei in das Langloch an dem Maschinenportal eingepasst.

Gattungsfremder Stand der Technik ist bekannt aus US 2009/0110336 A1, US 3,790,233 A sowie aus GB 2 218 121 A.

US 2009/0110336 A1 betrifft eine Linearführung mit einem Führungsprofil, an welchem ein Schlitten längsbeweglich geführt ist. Der Schlitten ist senkrecht zu seiner Bewegungsrichtung spielfrei an dem Führungsprofil abgestützt. Die spielfreie Abstützung des Schlittens stellt sich bei Bedarf selbsttätig nach. Eine Schwenkbeweglichkeit des Führungsprofils oder des Schlittens ist nicht offenbart.

Gemäß US 3,790,233 A umfasst eine Längsführung ein im Querschnitt U-förmiges Führungsprofil, an welchem ein Schlitten längsbeweglich geführt ist. An seinen in Bewegungsrichtung verlaufenden Längsseiten ist der Schlitten über Rollenlager an gleichfalls in Bewegungsrichtung verlaufenden Flächen des Führungsprofils abgestützt. Der Schlitten und das Führungsprofil sind quer zu der Bewegungsrichtung des Schlittens spielfrei aneinander gelagert. Ein selbsttätiges Nachstellen der spielfreien gegenseitigen Abstützung des Schlittens und des Führungsprofils quer zu der Bewegungsrichtung des Schlittens ist nicht vorgesehen. Außerdem fehlt es an einer Schwenkbeweglichkeit des Führungsprofils und/oder des Schlittens.

GB 2 218 121 A betrifft eine Kolben-Zylinder-Einheit mit einem Zylinder und einem in dem Zylinder geführten Kolben, der seinerseits zur Höhenverstellung eines Lagerzapfens einer Rolle dient. Quer zu der Achsrichtung des Zylinders und des Kolbens federnd vorgespannte Dichtungsringe dichten den Kolben gegen die achsparallele Wand des Zylinders ab und bewirken eine Zentrierung des in die untere Endlage bewegten Kolbens.

Für eine Tragstruktur der gattungsgemäßen Art mit geringem konstruktivem Aufwand eine Schwenkbeweglichkeit der Tragstruktur und gleichzeitig mittels eines Loslagers eine dauerhaft spielfreie Lagerung der Tragstruktur in Vorschubrichtung zu realisieren, ist Aufgabe der vorliegenden Erfindung.

Erfindungsgemäß gelöst wird diese Aufgabe durch die Bewegungseinheit gemäß Patentanspruch 1 sowie durch die Werkzeugmaschine gemäß Patentanspruch 9.

Im Falle der Erfindung sind der Lagervorsprung und die Aufnahmewand der Lageraufnahme der in der Führungs-Querrichtung als Loslager wirkenden Lagerung in der Vorschubrichtung gegeneinander vorgespannt und unter der Wirkung dieser Vorspannung gegeneinander in der Vorschubrichtung nachsetzbar. Aufgrund der erfindungsgemäßen Merkmale stellt sich die in der Vorschubrichtung als Festlager wirkende Lagerung selbsttätig nach. Dadurch wird eine spielfreie gegenseitige Abstützung des Lagervorsprungs und der Aufnahmewand der Lageraufnahme in der Vorschubrichtung dauerhaft sichergestellt. Die spielfreie Lagerung in der Vorschubrichtung wird insbesondere auch durch Verschleiß an dem Lagervorsprung und/oder an der Aufnahmewand der Lageraufnahme nicht beeinträchtigt.

Gleichzeitig lässt die in der Vorschubrichtung spielfreie und in der Führungs-Querrichtung lose Lagerung der Tragstruktur an der Führungseinheit Schwenkbewegungen der Tragstruktur relativ zu der Führungseinheit um eine Achse zu, die senkrecht zu der von der Vorschubrichtung und der Führungs-Querrichtung aufgespannten Ebene verläuft. Derartige Schwenkbewegungen der Tragstruktur werden beispielsweise dann ausgeführt, wenn an den in der Führungs-Querrichtung gegeneinander versetzten Führungseinheiten unerwünschterweise auch ein Versatz in der Vorschubrichtung auftritt.

Besondere Ausführungsarten der Bewegungseinheit nach Patentanspruch 1 und der Werkzeugmaschine nach Patentanspruch 9 ergeben sich aus den abhängigen Patentansprüchen 2 bis 8.

Ausweislich Patentanspruch 2 ist in bevorzugter Ausgestaltung der Erfindung für den Lagervorsprung und/oder für die Aufnahmewand der Lageraufnahme eine mehrteilige Ausbildung vorgesehen. Die spielfreie gegenseitige Abstützung des Lagervorsprungs und der Aufnahmewand der Lageraufnahme wird mittels eines Spannelementes realisiert, das sich an einer zugehörigen Basis abstützt. Diese Mehrteiligkeit eröffnet auch die Möglichkeit, dasjenige Maschinenelement, das letztlich für die spielfreie gegenseitige Lagerung von Lagervorsprung und Aufnahmewand der Lageraufnahme sorgt, nämlich das Spannelement, an die Erfordernisse des jeweiligen Anwendungsfalls anzupassen und bei Bedarf, etwa verschleißbedingt, gegen ein Ersatzteil auszutauschen.

Die Abstützung des Spannelementes an der zugeordneten Basis ist in weiterer Ausgestaltung der Erfindung nach Art eines Keilgetriebes ausgebildet (Patentanspruch 3). An dem Spannelement und/oder an der zugeordneten Basis ist eine in der Vorschubrichtung geneigte Keilfläche vorgesehen. Das Spannelement wird durch ein Vorspannmittel beaufschlagt. Über die Keilfläche(n) können ungeachtet einer platzsparenden Bauweise des Keilgetriebes große in Vorschubrichtung wirksame Belastungen abgetragen werden. Zum gegenseitigen Nachstellen des Lagervorsprungs und der Aufnahmewand der Lageraufnahme in der Vorschubrichtung bewegt sich das Spannelement unter der Wirkung des Vorspannmittels längs der oder den Keilflächen relativ zu der zugeordneten Basis senkrecht zu der Vorschubrichtung.

Eine Bewegung des Spannelementes in Gegenrichtung und somit eine unerwünschte Lockerung der spielfreien gegenseitigen Abstützung von Lagervorsprung und Aufnahmewand der Lageraufnahme in der Vorschubrichtung wird im Falle der Erfindungsbauart gemäß Patentanspruch 4 dadurch verhindert, dass das Spannelement an der zugehörigen Basis gegen eine entlang der Keilfläche(n) relativ zu der Basis ausgeführte Bewegung selbsthemmend abgestützt ist. Die selbsthemmende Abstützung kann durch entsprechende Wahl des Keilwinkels der Keilfläche an dem Spannelement und/oder der Keilfläche an der dem Spannelement zugeordneten Basis realisiert werden.

Gemäß Patentanspruch 5 sind an dem Lagervorsprung und/oder an der Aufnahmewand der Lageraufnahme zwei an einer zugeordneten Basis abgestützte und in Vorschubrichtung gegenüber dem jeweils anderen Lagerteil nachsetzbare Spannelemente vorgesehen, die einander an der betreffenden Basis in der Vorschubrichtung gegenüberliegen. Das gegenseitige Nachstellen des Lagervorsprungs und der Aufnahmewand der Lageraufnahme wird demnach auf zwei Spannelemente aufgeteilt. Insbesondere ist folglich von einem der Spannelemente jeweils nur ein Teil des insgesamt erforderlichen Nachstellweges bereitzustellen.

Damit an beiden Spannelementen einheitliche Verhältnisse herrschen, ist in Weiterbildung der Erfindung vorgesehen, dass die Spannelemente, die an einander in der Vorschubrichtung gegenüberliegenden Seiten der zugeordneten Basis vorgesehen sind, mechanisch miteinander gekoppelt sind (Patentanspruch 6). Aufgrund der mechanischen Kopplung führen die Spannelemente Bewegungen zum Nachstellen der gegenseitigen Abstützung des Lagervorsprungs und der Aufnahmewand der Lageraufnahme gemeinschaftlich und mit einem übereinstimmenden Betrag aus.

Ein gegenseitiger Versatz der in Führungs-Querrichtung voneinander beabstandeten Führungseinheiten kann sich insbesondere in dem für die betriebliche Praxis bedeutsamen Fall gemäß Patentanspruch 7 ergeben, in dem jede der beiden Führungseinheiten mittels eines eigenen Antriebsmotors in Vorschubrichtung bewegt wird und die Antriebsmotoren der Führungseinheiten nicht mechanisch miteinander verbunden sind.

Eine weitere in der Praxis häufig genutzte Ausführung der erfindungsgemäßen Bewegungseinheit ergibt sich aus Patentanspruch 8. Als Tragstruktur ist in diesem Fall ein Maschinenportal der Werkzeugmaschine vorgesehen.

Nachfolgend wird die Erfindung anhand beispielhafter schematischer Darstellungen näher erläutert. Es zeigen:
- Figur 1: den grundsätzlichen Aufbau einer Laser-Schneidmaschine mit einer Bewegungseinheit,
- Figur 2: die Bewegungseinheit der Laser-Schneidmaschine gemäß Figur 1 in der stark schematisierten Draufsicht,
- Figur 3: das Detail III in Figur 2 in vergrößerter Darstellung,

- Figur 4: eine Schnittdarstellung der Anordnung gemäß Figur 3 in einer Schnittebene, die in Figur 3 senkrecht zu der Zeichenebene entlang der Linie IV-IV verläuft und
- Figuren 5 und 6: Alternativen zu der Anordnung gemäß den Figuren 3 und 4.

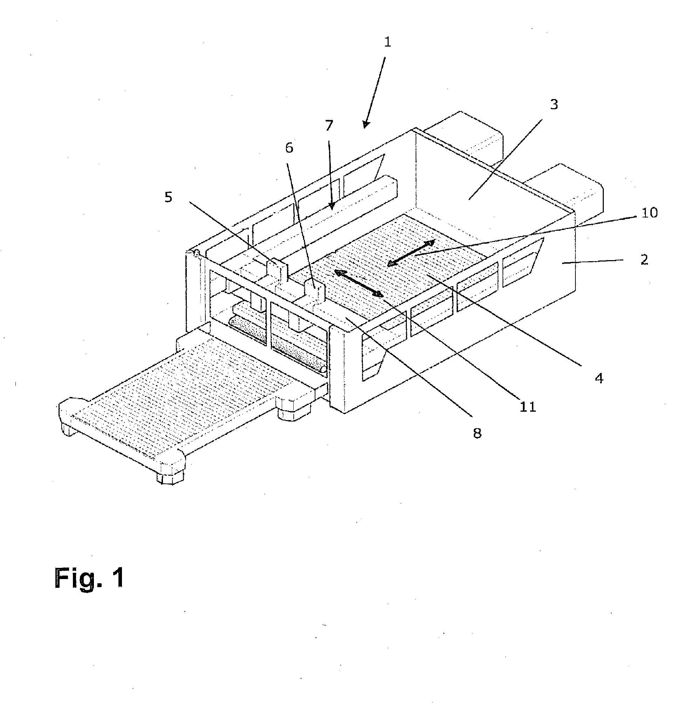

Ausweislich Figur 1 besitzt eine als Laser-Schneidmaschine 1 für die Blechbearbeitung ausgebildete Werkzeugmaschine einen von einer Einhausung 2 begrenzten Arbeitsbereich 3. In dem Arbeitsbereich 3 ist eine Werkstückauflage 4 herkömmlicher Bauart angeordnet, die zur Lagerung eines zu bearbeitenden Bleches und auch zur Lagerung der Produkte der Blechbearbeitung dient. Der Einfachheit halber sind in Figur 1 zu bearbeitende Bleche und durch die Blechbearbeitung erzeugte Bearbeitungsprodukte nicht dargestellt.

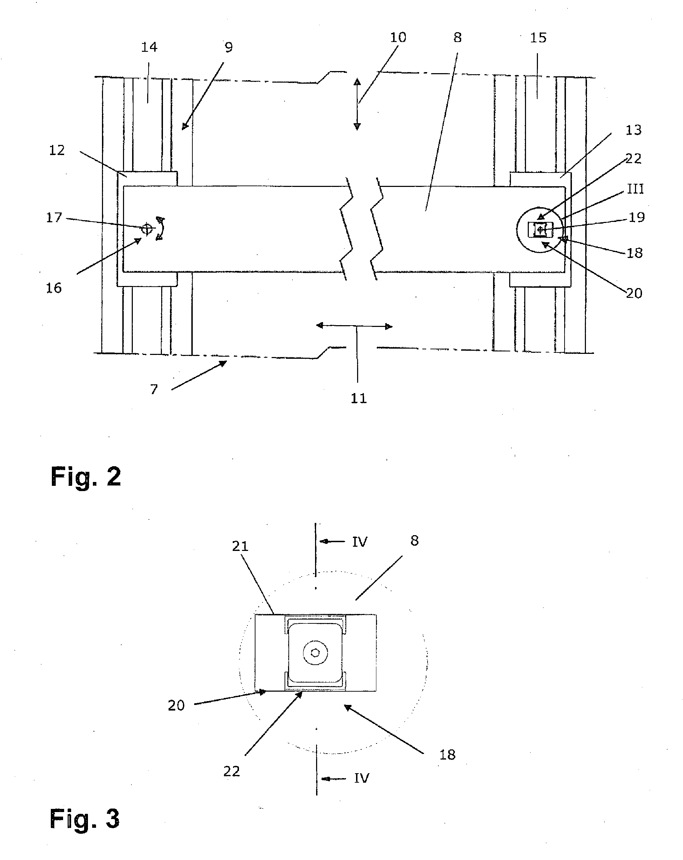

Zur schneidenden Bearbeitung wird ein auf der Werkstückauflage 4 gelagertes Blech von Laser-Schneidköpfen 5, 6 überfahren. Die Laser-Schneidköpfe 5, 6 bilden Funktionseinheiten der Laser-Schneidmaschine und werden mit Hilfe einer Bewegungseinheit 7 der Laser-Schneidmaschine 1 bewegt. Die Bewegungseinheit 7 umfasst eine Tragstruktur in Form eines die Werkstückauflage 4 überspannenden Maschinenportals 8 sowie eine in Figur 2 im Einzelnen dargestellte Führungseinrichtung 9, welche das Maschinenportal 8 in einer durch einen Doppelpfeil veranschaulichten Vorschubrichtung 10 führt.

An dem Maschinenportal 8 sind die Laser-Schneidköpfe 5, 6 mittels nicht dargestellter Antriebsmotoren in einer gleichfalls durch einen Doppelpfeil symbolisierten Führungs-Querrichtung 11 verfahrbar. In der Vorschubrichtung 10 wird das Maschinenportal 8 gemeinschaftlich mit den Laser-Schneidköpfen 5, 6 bewegt. Zu diesem Zweck ist an jedem der Längsenden des Maschinenportals 8 ein Linearmotor herkömmlicher Bauart vorgesehen. Auch die Linearmotoren des Maschinenportals 8 sind in den Figuren 1 bis 6 der Einfachheit halber nicht dargestellt.

Der in der Vorschubrichtung 10 bewegte Teil eines jeden Linearmotors des Maschinenportals 8 ist mit einer Führungseinheit der Führungseinrichtung 9 verbunden. Die Führungseinheiten der Führungseinrichtung 9 sind als Vorschubschlitten 12, 13 ausgebildet, die in Figur 2 stark schematisch dargestellt sind. Die Vorschubschlitten 12, 13 sind an ortsfesten Längsführungen 14, 15 der Führungseinrichtung 9 in der Vorschubrichtung 10 bewegbar geführt. Die Längsführungen 14, 15 sind in der Führungs-Querrichtung 11 voneinander beabstandet und bilden dadurch einen Zwischenraum aus, in welchem die Werkstückauflage 4 der Laser-Schneidmaschine 1 angeordnet ist. Die Vorschubschlitten 12, 13 sind an den Längsführungen 14, 15 in der Führungs-Querrichtung 11 spielfrei gelagert.

Die Vorschubschlitten 12, 13 ihrerseits lagern das Maschinenportal 8. Dabei lässt eine zur Lagerung des Maschinenportals 8 an dem Vorschubschlitten 12 vorgesehene erste Lagereinrichtung 16 ausschließlich eine Schwenkbewegung des Maschinenportals 8 relativ zu dem Vorschubschlitten 12 zu. Eine Achse 17, um welche das Maschinenportal 8 relativ zu dem Vorschubschlitten 12 schwenken kann, verläuft senkrecht zu der von der Vorschubrichtung 10 und der Führungs-Querrichtung 11 aufgespannten Horizontalebene. Die Schwenkbeweglichkeit des Maschinenportals 8 um die Achse 17 ist in Figur 2 durch einen gekrümmten Doppelpfeil angedeutet. In der Vorschubrichtung 10 und auch in der Führungs-Querrichtung 11 bildet die erste Lagereinrichtung 16 ein Festlager, das dementsprechend den Vorschubschlitten 12 und das Maschinenportal 8 sowohl in der Vorschubrichtüng 10 als auch in der Führung-Querrichtung 11 spielfrei aneinander abstützt.

Eine zweite Lagereinrichtung 18 an dem gegenüberliegenden Längsende des Maschinenportals 8 unterscheidet sich von der ersten Lagereinrichtung 16 insofern, als sie im Gegensatz zu der ersten Lagereinrichtung 16 in der Führungs-Querrichtung 11 Bewegungen des Maschinenportals 8 relativ zu dem Vorschubschlitten 13 erlaubt. In der Führungs-Querrichtung 11 bildet die zweite Lagereinrichtung 18 folglich ein Loslager für das Maschinenportal 8. Im Übrigen wirkt die zweite Lagereinrichtung 18 ebenso wie die erste Lagereinrichtung 16 als Festlager in der Vorschubrichtung 10. Und auch die zweite Lagereinrichtung 18 gestattet Schwenkbewegungen des Maschinenportals 8 relativ zu der zugeordneten Führungseinheit der Führungseinrichtung 9. Eine Achse 19, um welche das Maschinenportal 8 relativ zu dem Vorschubschlitten 13 schwenken kann, ist in Figur 2 angedeutet. Auch die Achse 19 verläuft senkrecht zu der von der Vorschubrichtung 10 und der Führungs-Querrichtung 11 aufgespannten Horizontalebene.

Wie an der zweiten Lagereinrichtung 18 die Festlagerfunktion in der Vorschubrichtung 10 und die Loslagerfunktion in der Führungs-Querrichtung 11 konstruktiv miteinander kombiniert sind, ergibt sich aus den Figuren 3 bis 6.

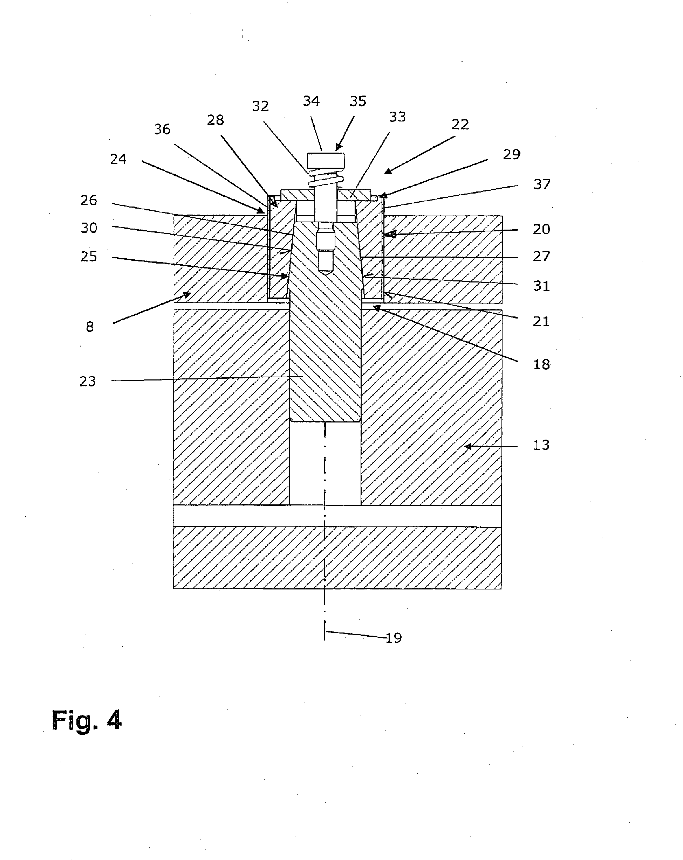

Gemäß den Figuren 3 und 4 umfasst die zweite Lagereinrichtung 18 als tragstrukturseitigen Lagerteil eine an dem Maschinenportal 8 vorgesehene Lageraufnahme in Form einer Kulissennut 20 mit einer eine Aufnahmewand ausbildenden Nutwand 21. Als führungsseitiger Lagerteil der zweiten Lagereinrichtung 18 ist an dem Vorschubschlitten 13 ein Lagervorsprung in Form eines Mitnehmers 22 vorgesehen. Der Mitnehmer 22 ist mit einem kreiszylindrischen Lagerbolzen 23 spielfrei in den Vorschubschlitten 13 eingepasst. Dabei ist der kreiszylindrische Lagerbolzen 23 unter Ausbildung der Achse 19 drehbar an dem Vorschubschlitten 13 gelagert.

Mit einem portalseitigen Teil 24 greift der mit dem Vorschubschlitten 13 verbundene Mitnehmer 22 in die Kulissennut 20 an dem Maschinenportal 8 ein. Im Einzelnen umfasst der portalseitige Teil 24 des Mitnehmers 22 eine Vorsprungbasis 25 mit Keilflächen 26, 27 an einander in der Vorschubrichtung 10 gegenüberliegenden Seiten der Vorsprungbasis 25. Der Vorsprungbasis 25 zugeordnet sind Vorsprung-Spannelemente in Form von Spannkeilen 28, 29. Der Spannkeil 28 liegt mit einer Keilfläche 30 an der Keilfläche 26, der Spannkeil 29 mit einer Keilfläche 31 an der Keilfläche 27 der Vorsprungbasis 25 an. Senkrecht zu der Vorschubrichtung 10 werden die Spannkeile 28, 29 durch eine als Vorspannmittel dienende Andruckfeder 32 beaufschlagt. Die Andruckfeder 32 ist zwischen einer auf den Spannkeilen 28, 29 aufliegenden Druckplatte 33 und der Unterseite eines Schraubenkopfes 34 einer Passschraube 35 verspannt. Mit ihrem Gewinde ist die Passschraube 35 in ein Innengewinde an der Vorsprungbasis 25 eingeschraubt. Die Spannkeile 28, 29 und die zweiseitig keilförmige Vorsprungbasis 25 bilden ein Keilgetriebe. Unter der Wirkung der Beaufschlagung durch die Andruckfeder 32 sind die Spannkeile 28, 29 bestrebt, sich mit ihren Keilflächen 30, 31 längs der Keilflächen 26, 27 der Vorsprungbasis 25 zu verlagern. Durch die Keilwirkung werden die Spannkeile 28, 29 gegen die Nutwand 21 der Kulissennut 20 vorgespannt. An ihrer der Nutwand 21 zugewandten Seite sind die Spannkeile 28, 29 mit Gleitbelägen 36, 37 versehen.

Die Vorspannung der Spannkeile 28, 29 gegen die Nutwand 21 ist derart bemessen, dass in der Vorschubrichtung 10 eine spielfreie Abstützung des Mitnehmers 22 an der Nutwand 21 und somit eine in der Vorschubrichtung 10 spielfreie Lagerung des Maschinenportals 8 an dem Vorschubschlitten 13 sichergestellt ist. Gleichzeitig lässt die Vorspannung der Spannkeile 28, 29 gegen die Nutwand 21 in der Führungs-Querrichtung 11 Bewegungen der Nutwand 21 gegenüber den Spannkeilen 28, 29 und somit Bewegungen des Maschinenportals 8 relativ zu dem Vorschubschlitten 13 zu. Erleichtert werden in der Führungs-Querrichtung 11 ausgeführte Bewegungen des Maschinenportals 8 relativ zu dem Vorschubschlitten 13 durch die Gleitbeläge 36, 37 der Spannkeile 28, 29.

Aufgrund der Beaufschlagung der Spannkeile 28, 29 durch die Andruckfeder 32 ist gewährleistet, dass die Vorspannung der Spannkeile 28, 29 gegen die Nutwand 21 und folglich auch die spielfreie Abstützung des Maschinenportals 8 an dem Vorschubschlitten 13 in der Vorschubrichtung 10 insbesondere auch bei Verschleiß an den Spannkeilen 28, 29, etwa an den Gleitbelägen 36, 37, aufrechterhalten bleibt. In derartigen Fällen werden die Spannkeile 28, 29 unter der Wirkung der Andruckfeder 32 mit ihren Keilflächen 30, 31 längs der Keilflächen 26, 27 der Vorsprungbasis 25 bewegt und aufgrund der dabei auftretenden Keilwirkung in der Vorschubrichtung 10 gegen die Nutwand 21 der Kulissennut 20 nachgesetzt.

Die Größe der Keilwinkel an den Spannkeilen 28, 29 und an der Vorsprungbasis 25 ist derart gewählt, dass die Spannkeile 28, 29 im Bedarfsfall hinreichend weit in der Vorschubrichtung 10 nachgestellt werden können und dass sich gleichzeitig an den miteinander in Kontakt befindlichen Keilflächen 26, 30 und 27, 31 eine Selbsthemmung der Spannkeile 28, 29 gegen Bewegungen relativ zu der Vorsprungbasis 25 einstellt, die ansonsten durch in der Vorschubrichtung 10 zwischen dem Maschinenportal 8 und dem Vorschubschlitten 13 wirkende Kräfte verursacht und die gegen die Wirkung der Andruckfeder 32 ausgeführt würden.

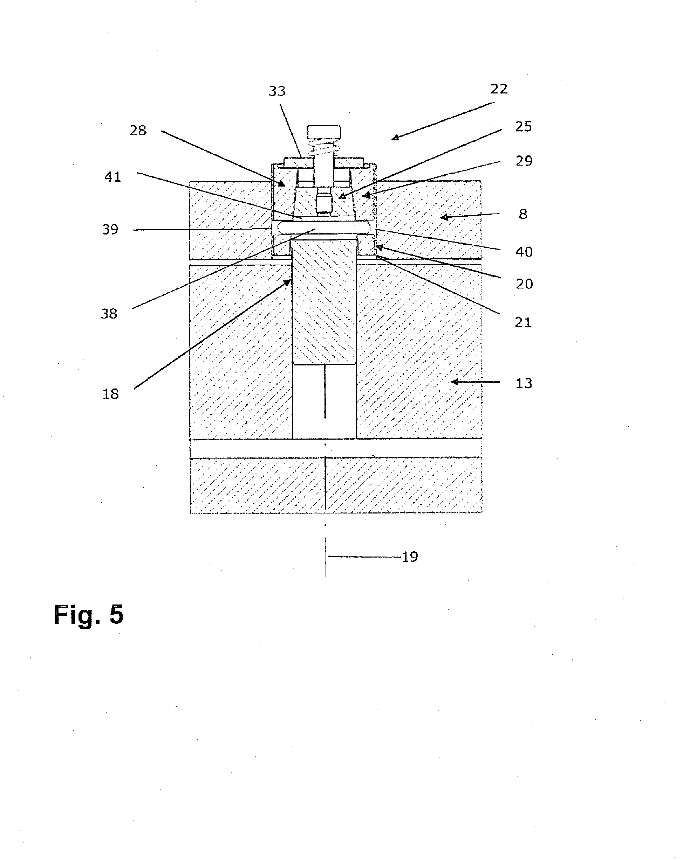

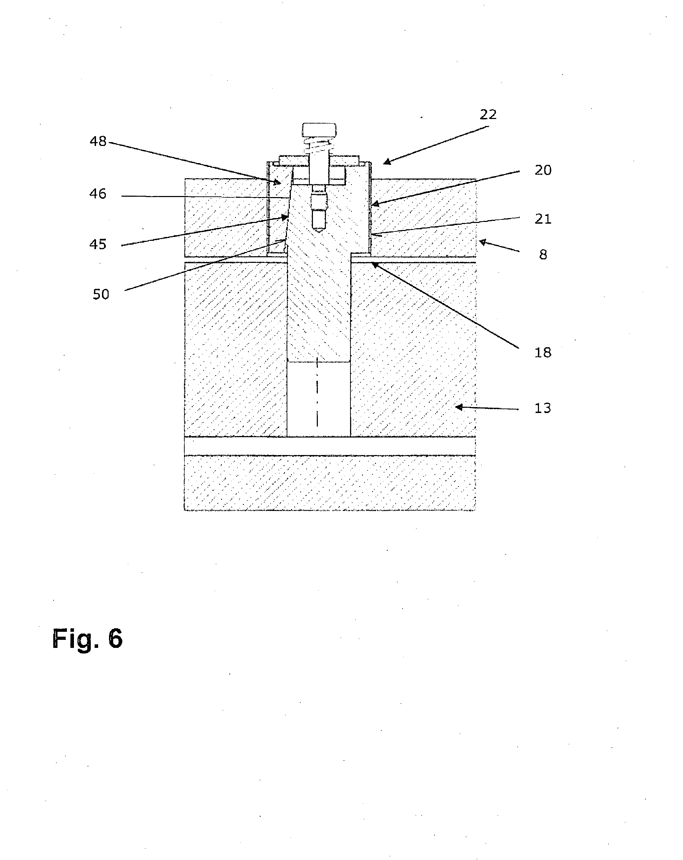

Anstelle der in den Figuren 3 und 4 dargestellten Bauweise ist für die zweite Lagereinrichtung 18 auch die Bauweise gemäß Figur 5 oder die Bauweise gemäß Figur 6 denkbar.

In Figur 5 sind die Spannkeile 28, 29 abweichend von den Verhältnissen nach den Figuren 3 und 4 mechanisch miteinander gekoppelt. Die mechanische Verbindung zwischen den Spannkeilen 28, 29 wird dabei mittels eines Verbindungsbolzens 38 hergestellt, der mit seinen Enden längsbeweglich in Bohrungen 39, 40 an den Spannkeilen 28, 29 eingreift und der an der Vorsprungbasis 25 in einem Langloch 41 der Vorsprungbasis 25 in Richtung der Achse 19 beweglich geführt ist. Die mittels des Verbindungsbolzens 38 hergestellte mechanische Verbindung zwischen den Spannkeilen 28, 29 sorgt zusätzlich zu der die Spannkeile 28, 29 beaufschlagenden Druckplatte 33 dafür, dass die Spannkeile 28, 29 bei Nachstellbewegungen in Richtung der Achse 19 übereinstimmende Weglängen zurücklegen. Die Zentrierung des Mitnehmers 22 im Innern der Kulissennut 20 wird dadurch zusätzlich gesichert.

Figur 6 zeigt die zweite Lagereinrichtung 18 in einer Ausführung, bei welcher eine Vorsprungbasis 45 des Mitnehmers 22 lediglich an einer ihrer in der Vorschubrichtung 10 gelegenen Seiten mit einer Keilfläche 46 versehen ist und die lediglich von einem einzelnen Spannkeil 48 mit einer Keilfläche 50 Gebrauch macht. Eine Nachstellbewegung wird dementsprechend nur an einer der in der Vorschubrichtung 10 gelegenen Seiten des Mitnehmers 22 ausgeführt. An der dem Spannkeil 48 in der Vorschubrichtung 10 gegenüberliegenden Seite ist der Mitnehmer 22 ohne Zwischenschaltung eines Spannelementes mit der Vorsprungbasis 45 an dem Maschinenportal 8 abgestützt. Durch die Abstützung der Vorsprungbasis 45 unmittelbar an der Nutwand 21 der Kulissennut 20 wird die Lage des Mitnehmers 22 und somit auch des Vorschubschlittens 13 zum Maschinenportal 8 gleichbleibend und insbesondere unabhängig von etwaigen Nachstellbewegungen des Spannkeils 48 definiert. Auch die Vorsprungbasis 45 weist maschinenportalseitig einen Gleitbelag auf.

## Patentansprüche

1. Bewegungseinheit einer Werkzeugmaschine
• mit einer in einer Vorschubrichtung (10) bewegbaren Tragstruktur (8) zur Lagerung einer Funktionseinheit (5, 6) der Werkzeugmaschine,
• mit einer Führungseinrichtung (9) für die Tragstruktur (8), die zwei in der Vorschubrichtung (10) verlaufende und quer dazu in einer Führungs-Querrichtung (11) gegeneinander versetzt angeordnete Längsführungen (14, 15) aufweist, an denen jeweils eine Führungseinheit (12, 13) der Führungseinrichtung (9) in der Vorschubrichtung (10) bewegbar und in der Führungs-Querrichtung (11) spielfrei gelagert ist sowie
• mit einer Lagereinrichtung (18), mittels derer die Tragstruktur (8) an einer der Führungseinheiten (12, 13) in der Vorschubrichtung (10) spielfrei und in der Führungs-Querrichtung (11) lose gelagert ist, indem die Lagereinrichtung (18) einen der Tragstruktur (8) zugeordneten tragstrukturseitigen Lagerteil sowie einen der Führungseinheit (13) zugeordnetenen führungsseitigen Lagerteil umfasst, von denen der eine als sich in der Führungs-Querrichtung (11) erstreckende Lageraufnahme (20) mit einer Aufnahmewand (21) und der andere als in die Lageraufnahme (20) eingreifender Lagervorsprung (22) ausgebildet ist, wobei der Lagervorsprung (22) und die Aufnahmewand (21) der Lageraufnahme (20) in der Vorschubrichtung (10) spielfrei aneinander gelagert sind und die Lageraufnahme (20) in der Führungs-Querrichtung (11) ein Übermaß gegenüber dem in die Lageraufnahme (20) eingreifenden Lagervorsprung (22) besitzt und wobei der Lagervorsprung (22) mit der Tragstruktur (8) oder mit der Führungseinheit (13) um eine Achse (19) drehbar verbunden ist, die senkrecht zu der Ebene verläuft, die von der Vorschubrichtung (10) und der Führungs-Querrichtung (11) aufgespannt wird,
**dadurch gekennzeichnet, dass**
der mit der Tragstruktur (8) oder mit der Führungseinheit (13) um die Achse (19) drehbar verbundene Lagervorsprung (22) und die Aufnahmewand (21) der Lageraufnahme (20) in der Vorschubrichtung (10) spielfrei aneinander gelagert sind, indem der mit der Tragstruktur (8) oder mit der Führungseinheit (13) um die Achse (19) drehbar verbundene Lagervorsprung (22) und die Aufnahmewand (21) der Lageraufnahme (20) in der Vorschubrichtung (10) gegeneinander vorgespannt und unter der Wirkung der Vorspannung in der Vorschubrichtung (10) gegeneinander nachsetzbar sind.

2. Bewegungseinheit nach Anspruch 1, **dadurch gekennzeichnet, dass** der Lagervorsprung (22) und die Aufnahmewand (21) der Lageraufnahme (20) in der Vorschubrichtung (10) gegeneinander vorgespannt und unter der Wirkung der Vorspannung gegeneinander nachsetzbar sind,
• indem der Lagervorsprung (22) ein Vorsprung-Spannelement (28, 29, 48) sowie eine Vorsprungbasis (25, 45) aufweist, die mit der Tragstruktur (8) oder mit der Führungseinheit (13), an welcher der Lagervorsprung (22) vorgesehen ist, verbunden ist, wobei das Vorsprung-Spannelement (28, 29, 48) unter Abstützung an der Vorsprungbasis (25, 45) in der Vorschubrichtung (10) gegen die Aufnahmewand (21) der Lageraufnahme (20) vorgespannt und nachsetzbar ist und/oder
• indem die Aufnahmewand (21) der Lageraufnahme (20) ein Wand-Spannelement sowie eine Wandbasis aufweist, die mit der Tragstruktur (8) oder mit der Führungseinheit (13), an welcher die Führungsaufnahme (20) vorgesehen ist, verbunden ist, wobei das Wand-Spannelement unter Abstützung an der Wandbasis in der Vorschubrichtung (10) gegen den Lagervorsprung (22) vorgespannt und nachsetzbar ist.

3. Bewegungseinheit nach Anspruch 2, **dadurch gekennzeichnet,**
• **dass** das Vorsprung-Spannelement (28, 29, 48) an einer in der Vorschubrichtung (10) geneigten Keilfläche (30, 31, 50) des Vorsprung-Spannelementes (28, 29, 48) und/oder an einer in der Vorschubrichtung (10) geneigten Keilfläche (26, 27, 46) der Vorsprungbasis (25, 45) an der Vorsprungbasis (25, 45) abgestützt ist, wobei das Vorsprung-Spannelement (28, 29, 48) aufgrund einer senkrecht zu der Vorschubrichtung (10) wirksamen Beaufschlagung durch ein Vorspannmittel (32) in der Vorschubrichtung (10) gegen die Aufnahmewand (21) der Lageraufnahme (20) vorgespannt und entlang der Keilfläche(n) (26, 27, 30, 31, 46, 50) relativ zu der Vorsprungbasis (25, 45) bewegbar und dadurch in der Vorschubrichtung (10) gegen die Aufnahmewand (21) der Lageraufnahme (20) nachsetzbar ist und/oder
• **dass** das Wand-Spannelement an einer in der Vorschubrichtung (10) geneigten Keilfläche des Wand-Spannelementes und/oder an einer in der Vorschubrichtung (10) geneigten Keilfläche der Wandbasis an der Wandbasis abgestützt ist, wobei das Wand-Spannelement aufgrund einer senkrecht zu der Vorschubrichtung (10) wirksamen Beaufschlagung durch ein Vorspannmittel (32) in der Vorschubrichtung (10) gegen den Lagervorsprung (22) vorgespannt und entlang der Keilfläche(n) relativ zu der Wandbasis bewegbar und dadurch in der Vorschubrichtung (10) gegen den Lagervorsprung (22) nachsetzbar ist.

4. Bewegungseinheit nach Anspruch 3, **dadurch gekennzeichnet,**
• **dass** das Vorsprung-Spannelement (28, 29, 48) an der in der Vorschubrichtung (10) geneigten Keilfläche (30, 31, 50) des Vorsprung-Spannelementes (28, 29, 48) und/oder an der in der Vorschubrichtung (10) geneigten Keilfläche (26, 27, 46) der Vorsprungbasis (25, 45) an der Vorsprungbasis (25, 45) gegen eine unter der Wirkung einer in der Vorschubrichtung (10) wirkenden Kraft entlang der Keilfläche(n) (26, 27, 30, 31, 46, 50) relativ zu der Vorsprungbasis (25, 45) ausgeführte Bewegung selbsthemmend abgestützt ist und/oder
• **dass** das Wand-Spannelement an der in der Vorschubrichtung (10) geneigten Keilfläche des Wand-Spannelementes und/oder an der in der Vorschubrichtung (10) geneigten Keilfläche der Wandbasis an der Wandbasis gegen eine unter der Wirkung einer in der Vorschubrichtung (10) wirkenden Kraft entlang der Keilfläche(n) relativ zu der Wandbasis ausgeführte Bewegung selbsthemmend abgestützt ist.

5. Bewegungseinheit nach einem der Ansprüche 2 bis 4, **dadurch gekennzeichnet,**
• **dass** der Lagervorsprung (22) an einander in der Vorschubrichtung (10) gegenüberliegenden Seiten jeweils ein Vorsprung-Spannelement (28, 29) aufweist, wobei jedes der Vorsprung-Spannelemente (28, 29) unter Abstützung an der Vorsprungbasis (25) in der Vorschubrichtung (10) gegen die Aufnahmewand (21) der Lageraufnahme (20) vorgespannt und nachsetzbar ist und/oder
• **dass** die Aufnahmewand (21) der Lageraufnahme (20) an einander in der Vorschubrichtung gegenüberliegenden Seiten jeweils ein Wand-Spannelement aufweist, wobei jedes der Wand-Spannelemente unter Abstützung an der Wandbasis in der Vorschubrichtung (10) gegen den Lagervorsprung (22) vorgespannt und nachsetzbar ist.

6. Bewegungseinheit nach Anspruch 5, **dadurch gekennzeichnet, dass** die Vorsprung-Spannelemente (28, 29) des Lagervorsprungs (22) und/oder die Wand-Spannelemente der Aufnahmewand (20) mechanisch miteinander gekoppelt sind.

7. Bewegungseinheit nach einem der vorhergehenden Ansprüche, **dadurch gekennzeichnet, dass** jede der beiden Führungseinheiten (12, 13) der Führungseinrichtung (9) mittels eines Antriebsmotors an der zugeordneten Längsführung (14, 15) in der Vorschubrichtung (10) bewegbar ist und dass die Antriebsmotoren der Führungseinheiten (12, 13) mechanisch voneinander entkoppelt sind.

8. Bewegungseinheit nach einem der vorhergehenden Ansprüche, **dadurch gekennzeichnet, dass** als Tragstruktur (8) ein Maschinenportal der Werkzeugmaschine vorgesehen ist.

9. Werkzeugmaschine mit einer Bewegungseinheit (7), **dadurch gekennzeichnet, dass** die Bewegungseinheit (7) nach einem der vorhergehenden Ansprüche ausgebildet ist.

## Claims

1. A movement unit of a machine tool
• having a supporting structure (8) movable in a feed direction (10) for mounting a functional unit (5, 6) of the machine tool,
• having a guide means (9) for the supporting structure (8), which guide means (9) comprises two longitudinal guides (14, 15) extending in the feed direction (10) and arranged offset relative to one another in a guide transverse direction (11) transverse to the feed direction (10), on which longitudinal guides (14, 15) a guide unit (12, 13) of the guide means (9) may in each case be moved in the feed direction (10) and is mounted without play in the guide transverse direction (11), and
• having a bearing means (18), by means of which the supporting structure (8) is mounted on one of the guide units (12, 13) without play in the feed direction (10) and floatingly in the guide transverse direction (11), the bearing means (18) comprising a supporting structure-side bearing part associated with the supporting structure (8) and a guide-side bearing part associated with the guide unit (13), of which one is constructed as a bearing receptacle (20) extending in the guide transverse direction (11) with a receptacle wall (21) and the other is constructed as a bearing projection (22) engaging in the bearing receptacle (20), wherein the bearing projection (22) and the receptacle wall (21) of the bearing receptacle (20) are mounted against one another without play in the feed direction (10) and the bearing receptacle (20) is oversized in the guide transverse direction (11) relative to the bearing projection (22) engaging in the bearing receptacle (20) and wherein the bearing projection (22) is connected with the supporting structure (8) or with the guide unit (13) so as to be rotatable about an axis (19) extending perpendicular to the plane defined by the feed direction (10) and the guide transverse direction (11),
**characterised in that**
the bearing projection (22) connected with the supporting structure (8) or with the guide unit (13) so as to be rotatable about the axis (19) and the receptacle wall (21) of the bearing receptacle (20) are mounted without play against one another in the feed direction (10), and the bearing projection (22) connected with the supporting structure (8) or with the guide unit (13) so as to be rotatable about the axis (19) and the receptacle wall (21) of the bearing receptacle (20) are pretensioned relative to one another in the feed direction (10) and, through the effect of this pretensioning, can be readjusted relative to one another in the feed direction (10).

2. A movement unit according to claim 1, **characterised in that** the bearing projection (22) and the receptacle wall (21) of the bearing receptacle (20) are pretensioned relative to one another in the feed direction (10) and, through the effect of this pretensioning, can be readjusted relative to one another,
• the bearing projection (22) comprising a projection tensioning element (28, 29, 48) and a projection base (25, 45), which is connected with the supporting structure (8) or with the guide unit (13) on which the bearing projection (22) is provided, wherein the projection tensioning element (28, 29, 48), with support at the projection base (25, 45), is pretensioned and can be readjusted in the feed direction (10) relative the receptacle wall (21) of the bearing receptacle (20) and/or
• the receptacle wall (21) of the bearing receptacle (20) comprising a wall tensioning element and a wall base, which is connected with the supporting structure (8) or with the guide unit (13) on which the guide receptacle (20) is provided, wherein the wall tensioning element, with support at the wall base, is pretensioned and can be readjusted in the feed direction (10) relative to the bearing projection (22).

3. A movement unit according to claim 2, **characterised in that**
• the projection tensioning element (28, 29, 48) is supported against the projection base (25, 45) at a wedge face (30, 31, 50), inclined in the feed direction (10), of the projection tensioning element (28, 29, 48) and/or at a wedge face (26, 27, 46), inclined in the feed direction (10), of the projection base (25, 45), wherein the projection tensioning element (28, 29, 48) is pretensioned in the feed direction (10) relative to the receptacle wall (21) of the bearing receptacle (20) as a result of a pretensioning means (32) acting perpendicular to the feed direction (10) and is movable along the wedge face(s) (26, 27, 30, 31, 46, 50) relative to the projection base (25, 45) and thereby readjustable in the feed direction (10) relative to the receptacle wall (21) of the bearing receptacle (20) and/or
• the wall tensioning element is supported against the wall base at a wedge face, inclined in the feed direction (10), of the wall tensioning element and/or at a wedge face, inclined in the feed direction (10), of the wall base, wherein the wall tensioning element is pretensioned in the feed direction (10) relative to the bearing projection (22) as a result of a pretensioning means (32) acting perpendicular to the feed direction (10) and is movable along the wedge face(s) relative to the wall base and thereby readjustable in the feed direction (10) relative to the bearing projection (22).

4. A movement unit according to claim 3, **characterised in that**
• the projection tensioning element (28, 29, 48) is supported in self-locking manner at the wedge face (30, 31, 50), inclined in the feed direction (10), of the projection tensioning element (28, 29, 48) and/or at the wedge face (26, 27, 46), inclined in the feed direction (10), of the projection base (25, 45) against the projection base (25, 45) against movement performed along the wedge face(s) (26, 27, 30, 31, 46, 50) relative to the projection base (25, 45) under the action of a force acting in the feed direction (10) and/or
• the wall tensioning element is supported in self-locking manner at the wedge face, inclined in the feed direction (10), of the wall tensioning element and/or at the wedge face, inclined in the feed direction (10), of the wall base against the wall base against movement performed along the wedge face(s) relative to the wall base under the action of a force acting in the feed direction (10).

5. A movement unit according to any one of claims 2 to 4, **characterised in that**
• the bearing projection (22) comprises a projection tensioning element (28, 29) on each of mutually opposing sides in the feed direction (10), wherein each of the projection tensioning elements (28, 29), supported against the projection base (25), is pretensioned and can be readjusted in the feed direction (10) relative to the receptacle wall (21) of the bearing receptacle (20) and/or
• the receptacle wall (21) of the bearing receptacle (20) comprises a wall tensioning element on each of mutually opposing sides in the feed direction, wherein each of the wall tensioning elements, supported against the wall base, is pretensioned and can be readjusted in the feed direction (10) relative to the bearing projection (22).

6. A movement unit according to claim 5, **characterised in that** the projection tensioning elements (28, 29) of the bearing projection (22) and/or the wall tensioning elements of the receptacle wall (20) are coupled together mechanically.

7. A movement unit according to any one of the preceding claims, **characterised in that** each of the two guide units (12, 13) of the guide means (9) is movable on the associated longitudinal guide (14, 15) in the feed direction (10) by means of a drive motor and **in that** the drive motors of the guide units (12, 13) are decoupled mechanically from one another.

8. A movement unit according to any one of the preceding claims, **characterised in that** a machine gantry of the machine tool is provided as the supporting structure (8).

9. A machine tool with a movement unit (7), **characterised in that** the movement unit (7) is constructed according to any one of the preceding claims.

## Revendications

1. Unité motrice équipant une machine-outil, comprenant
• une structure de support (8), mobile dans une direction d'avance (10) et dévolue au montage d'une unité fonctionnelle (5, 6) de ladite machine-outil,
• un dispositif de guidage (9) affecté à ladite structure de support (8) et doté de deux guides longitudinaux (14, 15) qui s'étendent dans la direction d'avance (10), sont placés avec décalage mutuel transversalement par rapport à ladite direction, dans une direction transversale de guidage (11), et sur lesquels une unité respective de guidage (12, 13) dudit dispositif de guidage (9) est montée avec mobilité dans ladite direction d'avance (10), et avec absence de jeu dans ladite direction transversale de guidage (11),
• un dispositif de montage (18) au moyen duquel la structure de support (8) est montée sur l'une desdites unités de guidage (12, 13), avec absence de jeu dans la direction d'avance (10) et avec jeu dans la direction transversale de guidage (11), en ce sens que ledit dispositif de montage (18) inclut une partie de montage située du côté de la structure de support et affectée à ladite structure de support (8), ainsi qu'une partie de montage affectée à l'unité de guidage (13) et située du côté de cette dernière, parties dont l'une est réalisée sous la forme d'un logement de montage (20) pourvu d'une paroi réceptrice (21) et s'étendant dans la direction transversale de guidage (11), et l'autre est réalisée sous la forme d'une saillie de montage (22) pénétrant dans ledit logement de montage (20), sachant que ladite saillie de montage (22) et ladite paroi réceptrice (21) dudit logement de montage (20) sont montées en applique l'une contre l'autre avec absence de jeu dans la direction d'avance (10) et que le logement de montage (20) présente, dans la direction transversale de guidage (11), un surdimensionnement vis-à-vis de ladite saillie de montage (22) pénétrant dans ledit logement de montage (20), et sachant que ladite saillie de montage (22) est reliée à ladite structure de support (8), ou à ladite unité de guidage (13), avec faculté de rotation autour d'un axe (19) s'étendant perpendiculairement au plan sous-tendu par ladite direction d'avance (10) et par ladite direction transversale de guidage (11),
**caractérisée par le fait que**
la saillie de montage (22), reliée à la structure de support (8) ou à l'unité de guidage (13) avec faculté de rotation autour de l'axe (19), et la paroi réceptrice (21) du logement de montage (20), sont montées en applique l'une contre l'autre avec absence de jeu dans la direction d'avance (10), en ce sens que ladite saillie de montage (22) reliée à ladite structure de support (8) ou à ladite unité de guidage (13) avec faculté de rotation autour dudit axe (19), et ladite paroi réceptrice (21) dudit logement de montage (20), sont précontraintes l'une vers l'autre dans la direction d'avance (10) et peuvent être mutuellement réajustées dans ladite direction d'avance (10), sous l'effet de la précontrainte.

2. Unité motrice selon la revendication 1, **caractérisée par le fait que** la saillie de montage (22) et la paroi réceptrice (21) du logement de montage (20) sont précontraintes l'une vers l'autre dans la direction d'avance (10) et peuvent être mutuellement réajustées, sous l'effet de la précontrainte,
• en ce sens que la saillie de montage (22) est munie d'un élément de serrage (28, 29, 48), ainsi que d'une embase (25, 45) qui est reliée à la structure de support (8) ou à l'unité de guidage (13) sur laquelle ladite saillie de montage (22) est prévue, sachant que ledit élément de serrage (28, 29, 48) de la saillie est précontraint et peut être réajusté vers la paroi réceptrice (21) du logement de montage (20), dans la direction d'avance (10), en prenant appui contre ladite embase (25, 45) de ladite saillie, et/ou
• en ce sens que ladite paroi réceptrice (21) du logement de montage (20) est munie d'un élément de serrage, ainsi que d'une embase qui est reliée à la structure de support (8) ou à l'unité de guidage (13) sur laquelle ledit logement de montage (20) est prévu, sachant que ledit élément de serrage de la paroi est précontraint et peut être réajusté vers la saillie de montage (22), dans la direction d'avance (10), en prenant appui contre ladite embase de ladite paroi.

3. Unité motrice selon la revendication 2, **caractérisée par le fait**
• **que** l'élément de serrage (28, 29, 48) de la saillie prend appui contre l'embase (25, 45) de ladite saillie au niveau d'une surface cunéiforme (30, 31, 50) dudit élément de serrage (28, 29, 48) de la saillie, inclinée dans la direction d'avance (10), et/ou au niveau d'une surface cunéiforme (26, 27, 46) de ladite embase (25, 45) de la saillie qui est inclinée dans ladite direction d'avance (10), sachant que, sous l'effet d'une sollicitation agissant perpendiculairement à la direction d'avance (10) et provoquée par un moyen de précontrainte (32), ledit élément de serrage (28, 29, 48) de la saillie est précontraint vers la paroi réceptrice (21) du logement de montage (20) dans ladite direction d'avance (10) et peut être mû par rapport à l'embase (25, 45) de ladite saillie, le long de la (des) surface(s) cunéiforme(s) (26, 27, 30, 31, 46, 50), en pouvant ainsi être réajusté, dans ladite direction d'avance (10), vis-à-vis de ladite paroi réceptrice (21) dudit logement de montage (20), et/ou
• **que** l'élément de serrage de la paroi prend appui contre l'embase de ladite paroi au niveau d'une surface cunéiforme dudit élément de serrage de la paroi, inclinée dans la direction d'avance (10), et/ou au niveau d'une surface cunéiforme de ladite embase de la paroi qui est inclinée dans ladite direction d'avance (10), sachant que, sous l'effet d'une sollicitation agissant perpendiculairement à la direction d'avance (10) et provoquée par un moyen de précontrainte (32), ledit élément de serrage de la paroi est précontraint vers la saillie de montage (22) dans ladite direction d'avance (10) et peut être mû par rapport à l'embase de ladite paroi, le long de la (des) surface(s) cunéiforme(s), en pouvant ainsi être réajusté, dans ladite direction d'avance (10), vis-à-vis de ladite saillie de montage (22).

4. Unité motrice selon la revendication 3, **caractérisée par le fait**
• **que** l'élément de serrage (28, 29, 48) de la saillie prend appui contre l'embase (25, 45) de ladite saillie, avec effet d'autoblocage, au niveau de la surface cunéiforme (30, 31, 50) dudit élément de serrage (28, 29, 48) de la saillie, inclinée dans la direction d'avance (10), et/ou au niveau de la surface cunéiforme (26, 27, 46) de ladite embase (25, 45) de la saillie qui est inclinée dans ladite direction d'avance (10), en opposition à un mouvement exécuté par rapport à ladite embase (25, 45) de la saillie, le long de ladite (desdites) surface(s) cunéiforme(s) (26, 27, 30, 31, 46, 50), sous l'action d'une force agissant dans ladite direction d'avance (10),
et/ou
• **que** l'élément de serrage de la paroi prend appui contre l'embase de ladite paroi, avec effet d'autoblocage, au niveau de la surface cunéiforme dudit élément de serrage de la paroi, inclinée dans la direction d'avance (10), et/ou au niveau de la surface cunéiforme de ladite embase de la paroi qui est inclinée dans ladite direction d'avance (10), en opposition à un mouvement exécuté par rapport à ladite embase de la paroi, le long de ladite (desdites) surface(s) cunéiforme(s), sous l'action d'une force agissant dans ladite direction d'avance (10).

5. Unité motrice selon l'une des revendications 2 à 4, **caractérisée par le fait**
• **que** la saillie de montage (22) est respectivement pourvue d'un élément de serrage (28, 29) sur des côtés mutuellement opposés dans la direction d'avance (10), sachant que chacun des éléments de serrage (28, 29) de ladite saillie est précontraint et peut être réajusté vers la paroi réceptrice (21) du logement de montage (20), dans la direction d'avance (10), en prenant appui contre l'embase (25) de ladite saillie, et/ou
• **que** ladite paroi réceptrice (21) du logement de montage (20) est respectivement pourvue d'un élément de serrage sur des côtés mutuellement opposés dans la direction d'avance, sachant que chacun des éléments de serrage de ladite paroi est précontraint et peut être réajusté vers la saillie de montage (22); dans la direction d'avance (10), en prenant appui contre l'embase de ladite paroi.

6. Unité motrice selon la revendication 5, **caractérisée par le fait que** les éléments de serrage (28, 29) de la saillie de montage (22), et/ou les éléments de serrage de la paroi réceptrice (21), sont couplés mécaniquement les uns aux autres.

7. Unité motrice selon l'une des revendications précédentes, **caractérisée par le fait que** chacune des deux unités de guidage (12, 13) du dispositif de guidage (9) peut être mue, au guide longitudinal (14, 15) associé, dans la direction d'avance (10), au moyen d'un moteur d'entraînement; et **par le fait que** les moteurs d'entraînement desdites unités de guidage (12, 13) sont découplés mécaniquement l'un de l'autre.

8. Unité motrice selon l'une des revendications précédentes, **caractérisée par le fait qu'**un portique de la machine-outil est prévu en tant que structure de support (8).

9. Machine-outil équipée d'une unité motrice (7), **caractérisée par le fait que** l'unité motrice (7) est réalisée conformément à l'une des revendications précédentes.
